# EUROPEAN PATENT APPLICATION

(11) **EP 4 332 521 A1**
(43) Date of publication of application: **06.03.2024**
(21) Application number: 23188111.1
(22) Date of filing: 27.07.2023
(51) Int. Cl.: G01G 19/02

(54) **WIM SYSTEM COMPRISING A WIM SENSOR**

(30) Priority: 02.09.2022 EP 22193714
(71) Applicant: Kistler Holding AG, 8408 Winterthur (CH)
(72) Inventor: Hailesilassie, Biruk, 8902 Urdorf (CH)

(57) **Abstract**

The invention relates to a WIM system 1 comprising at least one WIM sensor 2, said WIM sensor 2 being arranged in a lane 3 of a roadway 4 flush with a roadway surface 5. The lane 3 has a direction of travel 6 for vehicles 7. The which WIM sensor 2 is of long design along a longitudinal axis 8 with a length 25. The WIM sensor 2 has a plurality of measurement zones Mᵢ spaced apart from one another along the longitudinal axis 8. Each measurement zone Mᵢ is set up to individually determine a force Fᵢ exerted on the WIM sensor 2. The longitudinal axis 8 forms an alignment angle 20 with the direction of travel 6 such that a wheel 13 of a vehicle 7 passing over the WIM sensor 2 along the direction of travel 6 can be detected as measurement signals Sᵢ, Sⱼ, Sₖ by at least three adjacent measurement zones Mᵢ, Mⱼ, Mₖ.

## Description

### Technical field

The invention relates to a WIM (Weigh in Motion) system having at least one WIM sensor arranged in a roadway such that the measurement accuracy of the WIM system is improved.

### Background art

A WIM (Weigh in Motion) system comprises at least one WIM sensor. A WIM sensor measures a force that a vehicle exerts on a surface of a section of a roadway by the wheels of the vehicle while driving on the section of the roadway. For the sake of simplicity, section of the roadway will be referred to just as roadway. A roadway comprises at least one lane. The lane has a direction of travel for vehicles. A vehicle in this document refers to a vehicle which has at least two axels having two wheels per axle spaced apart perpendicular to the driving direction. A wheel may have a single tire, super-single tire, or double tire. It is common that the wheels of one axle are touching the lane at two tracks, which tracks are parallel to the driving direction and have a spacing perpendicular to the driving direction which is intrinsically equal to the spacing of the wheels on the axle.

The WIM system may have an additional sensor for vehicle identification, velocity measurement or vehicle presence measurement. A WIM sensor is arranged in the road flush with the surface of the roadway. Usually, a WIM sensor has an elongated form, and it is arranged with the elongation perpendicular to the tracks. Usually, the WIM sensor is arranged in such a way, that at least one track of a wheel passes the WIM sensor.

WIM sensors are usually used to determine a wheel force or an axle force or the total weight of a vehicle. The wheel force corresponds to a proportion of the total weight of a vehicle that exerts on the roadway surface by the wheel. The axle force is the sum of all wheel forces of the wheels of an axle. The total weight is the sum of all axle forces of all axles of the vehicle. If a force exerts on a WIM sensor arranged in the road, measurement elements arranged in the WIM sensor are providing a WIM signal proportional to the force exerted on the road.

WIM sensors having an elongated profile are known from EP0491655A1, EP2372322A1, EP2737465A1 or EP0654654A1. The WIM sensors have measurement elements arranged spaced apart from each other along the direction of elongation. The measurement elements may provide separate measurement signals. It is possible to determine the position of the track of a vehicle, i.e. the position of the wheel crossing the WIM sensor by identifying the measured signals of the measurement elements separately.

In addition, from EP0654654A1 a layout of several WIM sensors being arranged in a roadway and being part of a WIM system is known.

The measurement of a force the wheel exerts on the WIM sensor when crossing is depending next to the weight of the vehicle also on conditions of the road before the WIM sensor. Also breaking and acceleration maneuvers have an influence on the weight measurement. Therefore, to have a good measurement accuracy, usually several WIM are arranged in the road spaced apart in driving direction. By obtaining several measurements of the same wheel, the measurement accuracy may be increased, for example by standard statistical methods.

However, WIM sensors are expensive and thus, improved measurement accuracy of a WIM system having several WIM sensors spaced apart in driving direction comes at a high price. The WIM sensor itself is expensive, and, in addition, the installation in the roadway requires several cuts being made in the roadway, which is both, costly and time consuming.

Therefore, it is very common to only arrange two or three WIM sensors spaced apart in driving direction per lane.

It is a task of the invention to provide a more economic WIM system having a higher measuring accuracy than the arrangement of two WIM sensors spaced apart in driving direction.

### Summary of the invention

At least one of the tasks is solved by the features of the independent claims.

The inventive WIM system comprises at least one WIM sensor. The WIM sensor is arranged in a lane of a roadway flush with a roadway surface.

A lane in the context of this description has a direction of travel for vehicles. The lane is usually used for a single line of vehicles moving in the direction of travel. The roadway may have several lanes, which may be separated by lane markings. Different lanes may have different directions of travel, for example opposite directions of travel. The WIM sensor is of long design along a longitudinal axis and has a length along the longitudinal axis. The WIM sensor has a width perpendicular to the longitudinal axis and parallel to the roadway surface. A width of the WIM sensor is usually much smaller than a length of the WIM sensor along the longitudinal axis. Usually, the width is at least 5 times smaller than the length. The WIM sensor has a plurality of measurement zones spaced apart from one another along its longitudinal axis. Each measurement zone is set up to individually determine a force exerted on the WIM sensor in the region of the measurement zone and to provide it as a measurement signal. This way, the position of the force exerted can be determined. It is even possible to determine the position of the force exerted on the WIM sensor if the force is exerted in between two measurement zones. The force exerted is usually transferred in part to the neighboring measurement zone as well.

According to the invention, the longitudinal axis forms an alignment angle with the direction of travel such that the wheel of a vehicle passing over the WIM sensor along the direction of travel is detected as measurement signals of at least three adjacent measurement zones. One measurement signal is detected in each measurement zone. The wheel is exerting a force on the WIM sensor on at least three measurement zones it passes. The wheel in the sense of this description is a wheel of a self-propelled land vehicle with a width of at least 155 mm (1 mm (millimeter) is 10⁻³ meter). Although smaller wheel widths exist, vehicles having such wheel widths are of no interest in the context of this description. The necessary alignment angle is therefore directly determined by a contact patch width of the wheel when moving in direction of travel and a distance between the outmost of the three measuring zones. The contact patch width is the portion of the wheel of the vehicle that is in actual contact with the roadway surface.

A method for determining a measure of confidence in a measured wheel force using the WIM system is described, wherein the wheel force is exerted on the WIM sensor by the wheel passing over the WIM sensor. The wheel force of each measurement zone traversed is provided as the measurement signal. A confidence level is set according to the difference of the at least three measurement signals among another or an average value of at least three measurement signals is formed and a confidence level is set according to a deviation of the measurement signals provided when the wheel passes.

The deviation is the standard deviation, or the variance, or the maximum deviation, or proportional to the standard deviation, or proportional to the variance, or proportional to the maximum deviation. The deviation may also be another stochastic dispersion measure.

In the following, details of the WIM system and method are described. It should be noted that the features described in the following embodiments are not exclusively described for the respective embodiment. Unless explicitly mentioned that combination of features is not possible, the features of embodiments described can be combined as well.

In one preferred embodiment, the WIM System comprises at least one presence sensor which is set up to determine a presence of the vehicle on the lane. The lane is the same lane the WIM sensor is arranged in. This way, the presence of the vehicle on the lane can be detected. The wheel patch of most vehicles travelling along the travel direction cover the lane in a quite distinct position, called a usual track of the wheel. This track is known and cause in some lanes the infamous wheel ruts, also called track grooves. Due to the limited length of the WIM sensor in direction perpendicular to the travel direction, it might be that the wheel of the vehicle on the lane might not cross the WIM sensor, if the wheel is not traveling in the wheel track the wheel patches of most vehicles cover when driving on the lane. The WIM sensor in this case will not detect any measurement signal, as the wheel is not passing the WIM sensor. However, the presence sensor will measure the presence of the vehicle on the lane. This way, if the presence is detected but no or unsatisfactory measurement signal is achieved by the WIM sensor, the vehicle can be marked accordingly by an evaluation unit. Such a marked vehicle may be separated from the traffic by special light signs and lead towards a special location, where its weight may be determined in an ordinary fashion by a static vehicle scale for example.

Marking by the evaluation unit may include taking an image of the vehicle or part of the vehicle, for example a license plate.

In the WIM Sensor each two adjacent measurement zones have a distance along the longitudinal axis of the WIM sensor from each other. Each measuring zone comprises at least one measuring element.

The measuring element is a piezoelectric measuring element, or a piezoresistive measuring element, or a measuring element with strain gauges, or a fibre-optic measuring element introduced in an optical fibre. Of course, several of these measuring elements may be present in a measuring zone, wherein their measuring signals may be combined into one measuring signal of the measuring zone. A measuring element detects a force exerted on it. The measuring element in general is a force transducer. The skilled artist may think of other suited force detecting techniques differing from the once mentioned above and used in force transducers, like capacitive force transducers or others.

In a preferred embodiment, the WIM sensor comprises a profile elongated along the longitudinal axis. A long profile is beneficial, as mounting of the WIM sensor is simple if the profile is arranged as a whole in the roadway surface. As an alternative, two shorter profiles next to each other with respect to the longitudinal axis may be used.

In a particularly preferred embodiment, the WIM sensor comprises the profile elongated along the longitudinal axis with a space formed substantially along the longitudinal axis. Each measuring element is preferably preloaded in the space. The profile surrounds the space. The space inside the profile is protected from the environment, and environmental disturbances such as humidity, or dust. In addition, by applying the preload to the measuring element, no gaps are present in the force sensing direction between the profile and the measuring element. This results in a better proportionality of force exerted to the road and the measuring signal of the measuring element.

Preferably, the profile having a space is made from a conductive material, for example a metal. Such a profile provides electromagnetic shielding from outside electromagnetic disturbances, which might disturb the measurement signal.

In one embodiment, the presence sensor is an induction loop; or an optical sensor such as a laser sensor, a camera, a LIDAR. The presence sensor may also be a RADAR. Preferably, the presence sensor is an additional WIM sensor arranged at an alignment angle between 45° and 90° to the direction of travel. This is advantageous, as the additional WIM sensor may use the same evaluation unit as the WIM sensor. The presence sensor covers practically the whole width of the lane perpendicular to the driving direction. The presence sensor is therefore able to detect the presence of the vehicle on the lane. This is beneficial in the WIM system, as due to the angled arrangement of the WIM sensor in the lane with respect to the driving direction, the WIM sensor usually does not cover the lane completely perpendicular to the driving direction. While most wheels of vehicles tend to drive at the same tracks, vehicles driving not in the usually used tracks might miss the WIM sensor. In this case, their presence is still detected by the presence sensor.

The respective vehicle that (partially) missed the WIM sensor and for which no three measurement signals are available can be processed differently. For example, if three measurement signals are not available for the vehicle, it may be identified by identification means. Identification means might be a camera taking a picture of the vehicle or part of the vehicle (not shown).

It is also possible, if three measurement signals are not available for a vehicle, to guide the vehicle to an inspection site by a guiding system. The guiding system may include traffic signalization. The guiding system may also show the number plate of the vehicle identified, where a photo of the number plate was taken before by identification means. The inspection site may include a static vehicle scale.

Preferably the alignment angle is less than or equal to the arc cosine of the quotient of the width of a wheel contact patch of the wheel in the de-nominator and a length along the longitudinal axis in the numerator; wherein the length extends over at least three measurement zones. This way, wheels travelling along the driving direction in the track the WIM sensor is arranged in, will drive over at least three measurement zones.

It should be noted that the alignment angle may be choosen to be zero, i.e. the WIM sensor is longitudinal axis is parallel to the direction of travel.

It is understood, that albeit only positive alignment angles are mentioned within the description of this invention, negative alignment angles of the same absolute value have the same effect. Since the direction an angle is measured is not specified, negative and positive angles are interchangeable.

In a preferred embodiment, the WIM system comprises at least one evaluation unit, wherein the evaluation unit is set up to form and provide the mean value of the measurement signals provided when the wheel passes. The mean value of the measurement signals may be calculated by summing the measurement signals and dividing the sum by the number of measurement signals summed.

The evaluation unit comprises in a preferred embodiment the means to form and provide a deviation of the measurement signals provided when a wheel passes from the mean value. The deviation from the mean value is the standard deviation, or the variance, or the maximum deviation, or proportional to the standard deviation, or proportional to the variance, or proportional to the maximum deviation. The skilled person might also use another stochastic dispersion measure.

Preferably, the evaluation unit is set up to determine a difference time for at least two measurement zones; wherein the difference time is a time difference of the respective measurement signals of the at least two measurement zones.

Preferably, the alignment angle is smaller than 35°. The measurement zones are therefore spread farther from each other in the direction of travel than for alignment angles greater 90°. This has the advantage that the difference time can be determined at a higher precision. The relative measuring precision of a difference increases, when the measurement uncertainty of time measurement is a fixed amount of time. In the case of alignment angles around 90°, this would result in the unfavorable effect, that the difference time is mainly governed by the time measurement precision.

The evaluation unit is preferably set up to form and provide a wheel speed from the projection of the distance of the at least two measurement zones onto the direction of travel and the associated difference time. The wheel speed may be used in the WIM system to identify traffic violations or the like. The wheel speed may also be used to determine if the vehicle is braking or accelerating, both of which would influence wheel force exerted on the WIM sensor.

The evaluation unit is preferably adapted to form and provide a sorting signal.

The sorting signal is used to sort wheels exerting a force onto the WIM sensor into two groups: Wheels for which a good quality measurement was taken or wheels for which the measurement is not good quality. The skilled person must define the limit between good quality and not good quality measurements. This may be done by using a maximum allowable deviation of the measured values of the same wheel from each other. The limit between good quality and not good quality measurements may also be given in local regulations or handbooks on weight measurement of vehicles. Local regulations are for example mentioned in "NIST Handbook 44 - Specifications, Tolerances, and Other Technical Requirements for Weighing and Measuring Devices (as adopted by the 106th National Conference on Weights and Measures 2021), published 2022" by the National Institute of Standards and Technology, U.S. Department of Commerce or in a paper by Burnos et al. "Accuracy criteria for evaluation of weigh-in-motion systems", Metrology and Measurement Systems 24, pages 743-754, 2018.

The sorting signal assumes a first value if the deviation exceeds a pre-defined threshold value. The sorting signal assumes a second value if the deviation falls below a pre-defined threshold value or is equal to this threshold value.

Alternatively, the sorting signal assumes a first value if at least two formed wheel speeds differ from one another by more than a pre-defined threshold value and/or at least two measurement signals differ from one another by more than a pre-defined threshold value. The sorting signal assumes a second value if at least two formed wheel speeds deviate from each other by less than a pre-defined threshold value or deviate from each other by exactly this threshold value and/or at least two measurement signals deviate from each other by more than a pre-defined threshold value or deviate from each other by exactly this threshold value.

The expert may also use a combination of the requirements on deviation, wheel speeds and measurement signals for setting the sorting signal.

If the wheels speeds deviate more than a pre-defined value, the vehicle may be braking or accelerating, both of which will influence the measurement signal. The measurement signal is in this case not in agreement with the force a wheel with a uniform linear motion would exert on the road. If measurement signals of the measurement zones passed by the wheel deviate for one wheel passing the WIM sensor, sudden driving maneuvers of the wheel occurred or the like. Of course, the skilled person should always check if calibration of the respective measuring zones is correct. It is however assumed, that the WIM sensor is correctly characterized and calibrated according to general practice.

The first value of the sorting signal is different to the second value of the sorting signal. The pre-defined threshold value may also be a percentual difference.

The sorting signal may be used to indicate an unsatisfactory measurement by the WIM sensor. The respective vehicle can be marked accordingly by the evaluation unit. Such a marked vehicle may be separated from the traffic by special light signs according to the value of the sorting signal and lead towards a special location, where its weight may be determined in an ordinary fashion by a static vehicle scale for example.

Using a WIM system described above, a method to determine a measure of confidence in a measured wheel force is described in the following. A wheel force is exerted on the WIM sensor by a wheel passing over the WIM sensor. The wheel force of each measurement zone traversed is provided as a measurement signal.

A confidence level is set according to the difference of the at least three measurement signals among another or wherein an average value of at least three measurement signals is formed and a confidence level is set according to a deviation of the measurement signals provided when the wheel passes wherein the deviation is the standard deviation, or the variance, or the maximum deviation, or proportional to the standard deviation, or proportional to the variance, or proportional to the maximum deviation, or is another stochastic dispersion measure.

The confidence level may include different pre-defined intervals, which are separated by respective pre-defined threshold values. The confidence level may also be a continuous scale.

In a preferred method to determine a measure of confidence in a measured wheel force a difference time is defined for at least two measurement zones. The difference time is a time difference of the respective measurement signals of the at least two measurement zones. A wheel speed is formed from a distance of the at least two measurement zones along the direction of travel and an associated difference time. The confidence level is in addition or alternatively set by a stochastic dispersion measure of at least two wheel speeds.

Preferred the confidence level is set to a first value if the three measurement signals are equal within a pre-defined uncertainty range or the deviation is below a pre-defined value.

The method may include that the WIM system comprises the presence sensor in form of an additional WIM sensor arranged at an alignment angle between 45° and 90° to the direction of travel. The additional WIM sensor is arranged in the same lane and in driving direction spaced apart from the WIM sensor. The wheel of a passing vehicle also passes the presence sensor. The presence sensor has at least one measuring zone determining at least one force and at least one corresponding measurement signal of the presence sensor. The confidence level is set according to the difference of the at least three measurement signals and the measurement signal determined by the presence sensor. Alternatively, the confidence level is set according to the formed deviation of the average value of at least three measurement signals and the measurement signal determined by the presence sensor. The confidence level allows a user to easily determine the quality of the weight measurement of the WIM system.

The method and system described allow to have several individual measurements of the force a wheel exerts on the WIM sensor for most of the vehicles passing the lane, which allow a higher accuracy of the determined force than with a standard configuration of a WIM system having only two WIM sensors arranged perpendicular to the driving direction. A similar accuracy could only be achieved at a much higher cost by arranging several WIM sensors spaced apart in driving direction and arranged with the longitudinal axis perpendicular to the driving direction.

### Brief description of the drawings

The drawings used to explain the embodiments are schematic representations and show:
- Fig. 1: An illustration of an embodiment of a WIM system in top view,
- Fig. 2: An illustration of another embodiment of a WIM system in top view,
- Fig. 3: An illustration of an embodiment of a WIM system in a side view section along the longitudinal axis of the WIM sensor of Fig. 2,
- Fig. 4: An illustration of an embodiment of a WIM system in a view in driving direction in a section along the axis perpendicular to the driving direction of the WIM sensor of Fig. 2,
- Fig. 5: An enlarged view of the illustration of the WIM sensor in Fig. 1,
- Fig. 6: A sketch of an embodiment of the method for deter-mining a measure of confidence in a measured wheel force using a WIM system and,
- Fig. 7: A sketch of a preferred embodiment of the method for determining a measure of confidence in a measured wheel force using a WIM system,
- Fig. 8: A top view of a road.

### Preferred Embodiments

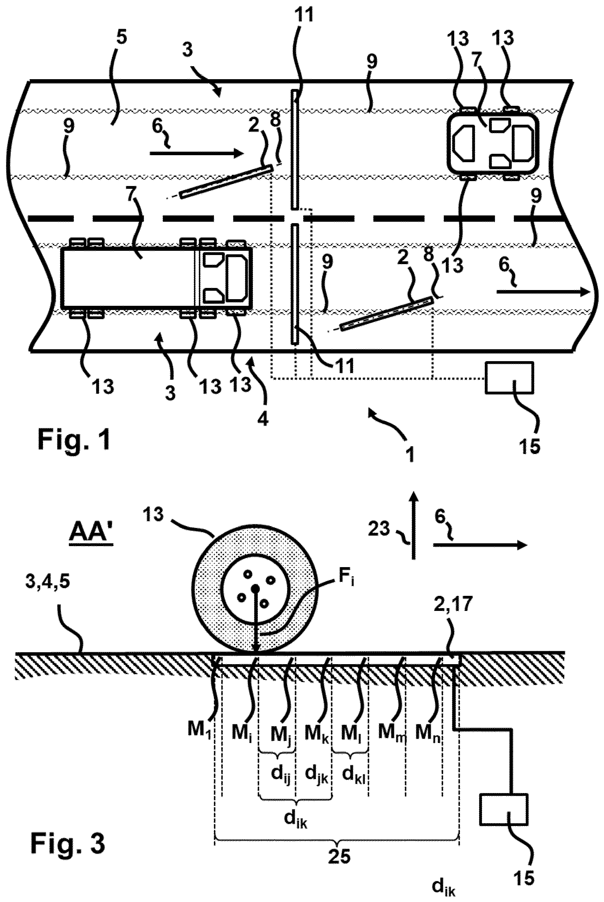

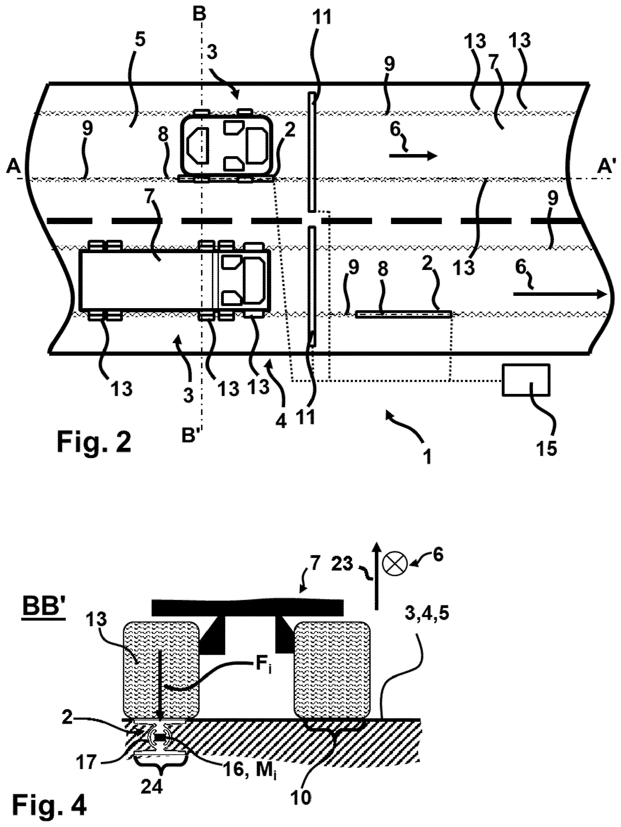

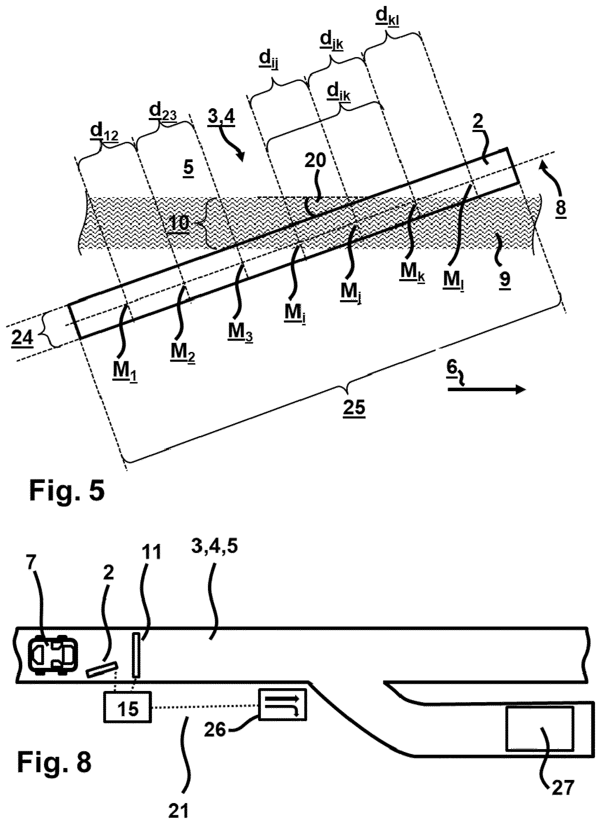

Fig. 1 and Fig. 2 show embodiment of a WIM system 1 according to the invention in a top view on the road surface. At least one WIM sensor 2 is arranged in a lane 3 of a roadway 4 flush with a roadway surface 5. Vehicles 7 are shown moving in the direction of travel 6. The longitudinal axis 8 of the WIM sensor 2 forms an alignment angle 10 with the direction of travel 6. Fig. 2 shows an embodiment with an alignment angle 20 of zero, whereas Fig. 1 shows an alignment angle 20 different from zero. The alignment angle 20 is for the sake of clarity not referenced in Fig. 1 and 2, but better visible in the enlarged view of the WIM sensor 2 of Fig. 1 shown in Fig. 5. The tracks 9 are shown schematically and indicate the position most wheels 13 of vehicles 7 have contact to the road surface 5 with the contact patch 10 of the wheel 13. It should be noted that the invention is not limited to a two lane 3 roadway 4. Also single lane 3 roadways 4 or roadways 4 with another number of lanes 3 may be equipped with a WIM system 1. The WIM sensor 2 is connected to an evaluation unit 15.

Fig. 3 shows a sectional view parallel to the direction of travel 6 and parallel to the height direction 23 of Fig. 2. The sectional axis is marked by line AA' in Fig. 2. The height direction 23 is perpendicular to the road surface 5. For the sake of clarity, a WIM sensor 2 is shown with an alignment angle 20 of zero, i.e. the WIM sensor 2 is aligned parallel to the driving direction 6. The WIM sensor 2 is arranged in the roadway 4 flush with the roadway surface 5. The WIM sensor 2 comprises at least three measuring zones Mᵢ, Mⱼ, Mₖ spaced apart in the direction of the longitudinal axis 8 by a respective distance dᵢⱼ, dⱼₖ. The wheel 13 of a vehicle 7 (vehicle 7 not shown) traveling along the WIM sensor 2 exerts a force Fᵢ on measuring zone Mᵢ of the WIM sensor 2. The WIM sensor 2 is connected to an evaluation unit 15. The length 25 of the WIM sensor 2 is higher than its width 24, the width 24 shown in the view of Fig. 4.

Fig. 4 shows a sectional view perpendicular to the direction of travel 6 and parallel to the height direction 23 of Fig. 2. The section is marked by line BB' in Fig. 2. In the embodiment shown, the WIM sensor 2 has a width 24 which is shorter than the width of the contact patch 10 of the wheel 13 or the vehicle 7. The vehicle 7 is traveling in direction of travel 6. The WIM sensor 2 comprises a profile 17. The profile 17 comprises in the embodiment shown in Fig. 4 a space 18 formed substantially along the longitudinal axis 8 (not shown). However, also profiles without a space may be chosen.

Each measuring zone Mᵢ comprises at least one measuring element 16, as shown in Fig. 4. Preferably, each measuring element 16 is arranged preloaded in the space 18.

Preferably, the profile 17 is made from a conductive material, for example a metal.

Fig. 5 shows a detail view of the WIM sensor 2 in top view. The WIM sensor 2 is arranged in a lane 6 of the roadway 4 flush with the roadway surface 5. The WIM sensor 2 has a width 24 perpendicular to the longitudinal axis 8 and parallel to the roadway surface 5. The width 24 of the WIM sensor 2 is usually significally smaller than the length 25 of the WIM sensor 2, for example at least five times smaller than the length. The WIM sensor 2 has a plurality of measurement zones Mᵢ, Mⱼ, Mₖ spaced apart from one another along its longitudinal axis 8. The distance dᵢⱼ between two adjacent measuring zones Mᵢ, Mⱼ in longitudinal direction is given by the producer of supplier of the WIM sensor 2. The track 9 is shown, where most wheels 13 (not shown) of vehicles 7 tend to drive on the lane 3.

The alignment angle 20 is chosen such that a wheel 13 of a vehicle 7 passing over the WIM sensor 2 parallel to the direction of travel 6 is detected as measurement signals Si, Sj, Sk of at least three adjacent measurement zones Mi, Mj, Mk. A wheel 13 has a width of the contact patch 10 of at least 155 mm.

Therefore, the alignment angle 20 is less than or equal to the arc cosine of the quotient of the width of a wheel contact patch 10 of the wheel 13 in the de-nominator and a distance dᵢₖ along the longitudinal axis 8 in the numerator; wherein the length dᵢₖ extends over at least three measurement zones Mᵢ, Mⱼ, Mₖ.

In Fig. 1 and Fig. 2 and Fig. 7 to Fig. 8, the WIM System 1 preferably comprises at least one presence sensor 11 which is set up to determine the presence of a vehicle 7 on the lane 3. The presence sensor 11 is arranged spaced apart from the WIM sensor 11 in direction of travel 6. The presence sensor 11 may be either arranged before or after the WIM sensor 2 with respect to the travel direction 6.

In the preferred embodiments shown in the figures, the presence sensor 11 is an additional WIM sensor arranged at an alignment angle of its elongated axis towards the direction of travel 6 between 45° and 90°, wherein 90°is shown exemplarily in the figures. Arrangements with alignment angles other than 90° of an additional WIM sensor are exemplarily shown in the herein cited state of the art.

If a vehicle 7, or rather its wheels 13, missed the track 9 the WIM sensor 2 is arranged in and three measurement signals Sᵢ, Sⱼ, Sₖ are not available for the vehicle 7, the vehicle 7 may be guided to an inspection site 27 by a guiding system 26 as shown in Fig. 8. The guiding system 26 may include traffic signalization. The inspection site may comprise a static vehicle scale.

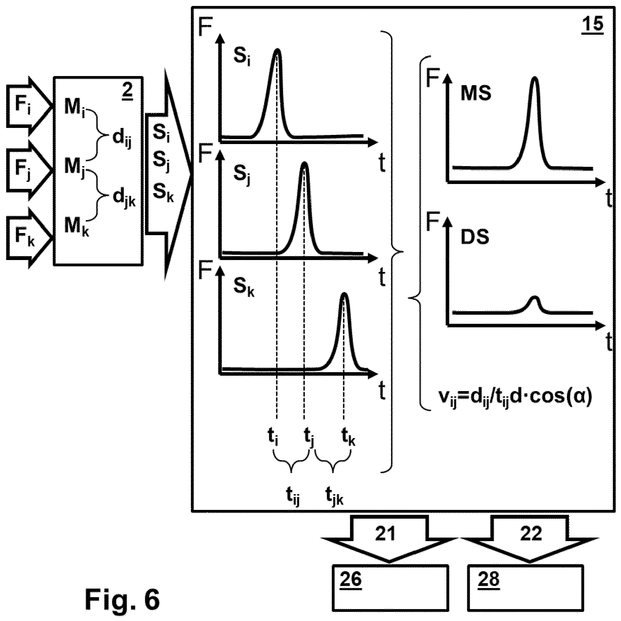

The WIM sensor 2 of the WIM system 1 comprises at least one evaluation unit 15, shown in Fig. 1, Fig. 2, and Fig 9 for example. The evaluation unit 15 is set up to form and provide the mean value MS of the measurement signals Sᵢ provided when the wheel 13 passes the WIM sensor 2 as shown in Fig. 6.

The evaluation unit 15 comprises in a preferred embodiment the means to form and provide a deviation DS of the measurement signals Sᵢ provided from the mean value MS, as shown in Fig. 6.

Preferably, the evaluation unit 15 is set up to determine a difference time tᵢⱼ for at least two measurement zones Mᵢ, Mⱼ, as shown in Fig. 6. In Fig. 6, The wheel speed vᵢⱼ is calculated from the projection of the distance dᵢⱼ of the at least two measurement zones Mᵢ, Mⱼ onto the direction of travel 6 and the associated difference time tᵢⱼ, with vᵢⱼ=dᵢⱼ ·cos (α) /tᵢⱼ, with α being the alignment angle 20The evaluation unit 15 is preferably adapted to form and provide the sorting signal 21 shown in in Fig. 6, Fig. 7, and Fig. 8.

Of course, also more complex schemes to calculate the wheel speed vᵢⱼ may be imagined, which may include additional WIM sensors (not shown) arranged in the road. A WIM system 1 with WIM sensors arranged in a known way may include a WIM sensor 2 arranged according to the invention before or behind the WIM sensor arrangement as shown in EP0654654A1 Figs. 11, 12, 15 or 16 and corresponding paragraphs.

In Fig. 8, the sorting signal 21 is used to indicate an unsatisfactory measurement by the WIM sensor 2. The respective vehicle 7 can be separated from the traffic by special light signs 26 according to the value of the sorting signal 21 and lead towards a special location 27 , where its weight may be determined in an ordinary fashion by a static vehicle scale 27 for example.

A Method for determining a measure of confidence in a measured wheel force Fᵢ using a WIM system 1 is schematically shown in Fig. 6. Measurement signals Si, Sj, Sk are provided to the evaluation unit. The mean value MS is determined by the evaluation unit 15. In addition, in the embodiment shown the deviation DS is determined by the evaluation unit 15. From the known distance dij, djk of measurement zones Mi, Mj, Mk and the known alignment angle 20, the vehicle speed vᵢⱼ is determined by the evaluation unit 15.

The evaluation unit 15 is adapted to determine a sorting signal 21, shown in Fig. 6, and to provide the sorting signal 21 to a traffic guiding system 26.

The evaluation unit 15 shown in Fig. 6 is in addition adapted to determine a confidence level 22 and provide it to a user (not shown), for example via a display 28. The display may also show representations of any of the following: the measuring signals Mᵢ ,Mⱼ, Mₖ, the mean value MS, the deviation DS, the vehicle speed vᵢⱼ, the time difference tᵢⱼ, the sorting signal 21, the confidence level 22.

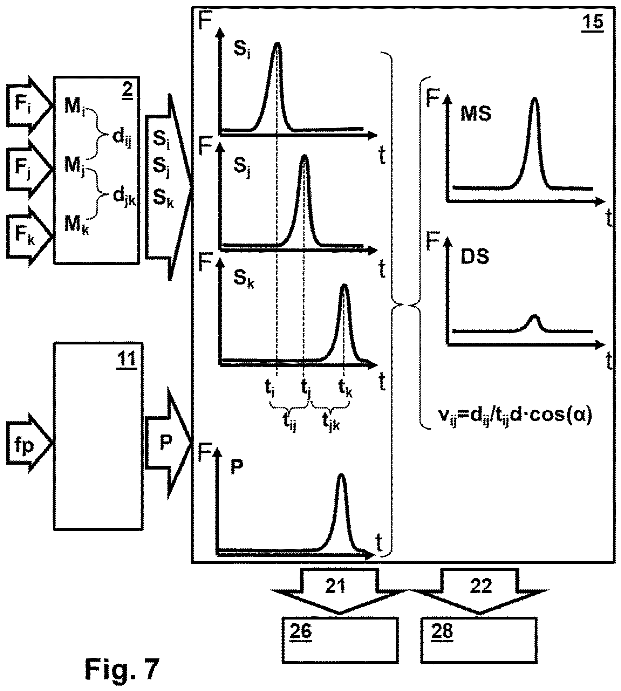

A confidence level 22 is set as shown in Fig. 6 and Fig. 7 for example. A confidence level 22 is set similar to the sorting signal 21 but may be used differently than for sorting of vehicles 7.

The WIM sensor 2 provides measurement signals Si, Sj, Sk of the wheel 13 exerting a force Fᵢ, Fⱼ, Fₖ on the WIM sensor 2 while passing, as shown in Fig. 6 and Fig. 7 for example. A confidence level 22 is set as explained above. The confidence level 22 allows a user to easily determine the quality of the weight measurement of the WIM system 1.

In Fig. 7, the embodiment is similar to the embodiment of Fig. 6, with a presence sensor 11 being present in the WIM system 1. The presence sensor 11 is detecting the presence of a vehicle 7 as a signal P, for example in case of the presence sensor 11 being an additional WIM sensor in form of a force signal P proportional to the force fp exerted on the additional WIM sensor.

It is understood that the different aspects and embodiments of the invention can be combined where possible and embodiments resulting from such a combination of embodiments described above are part of the invention as well. Unless explicitly mentioned that combination of features is not possible, the features of embodiments described may be combined.

### List of reference symbols

- 1: WIM system
- 2: WIM Sensor
- 3: lane
- 4: roadway
- 5: roadway surface
- 6: direction of travel
- 7: vehicle
- 8: longitudinal axis
- 9: track
- 10: width of the wheel contact patch
- 11: presence sensor
- 13: wheel
- 15: evaluation unit
- 16: measuring element
- 17: profile
- 18: space
- 20, α: alignment angle
- 21: sorting signal
- 22: confidence level
- 23: height direction
- 24: width
- 25: length
- 26: guiding system / traffic signaling
- 27: location / scale
- dᵢⱼ, dⱼₖ: distance
- DS: deviation
- Fᵢ, Fⱼ, Fₖ: force, wheel force
- fp: force, wheel force
- Mᵢ, Mⱼ, Mₖ: measuring zone
- MS: mean value
- P: measuring signal
- Sᵢ, Sⱼ, Sₖ: measuring signal
- tᵢⱼ: difference time
- vᵢⱼ: wheel speed

## Claims

1. WIM system (1); comprising at least one WIM sensor (2); said WIM sensor (2) being arranged in a lane (3) of a roadway (4) flush with a roadway surface (5); said lane (3) having a direction of travel (6) for vehicles (7); which WIM sensor (2) is of long design along a longitudinal axis (8) and has a length (25) along the longitudinal axis (8); which WIM sensor (2) has a width (24) perpendicular to the longitudinal axis (8) and parallel to the roadway surface (5); in that the WIM sensor (2) has a plurality of measurement zones (Mᵢ) spaced apart from one another along its longitudinal axis (8); wherein each measurement zone (Mᵢ ) is set up to individually determine a force (Fᵢ ) exerted on the WIM sensor (2) in the region of the measurement zone (Mᵢ) and to provide it as a measurement signal (Sᵢ); **characterized in that** the longitudinal axis (8) forms an alignment angle (20) with the direction of travel (6) such that a wheel (13) of a vehicle (7) passing over the WIM sensor (2) along the direction of travel (6) and exerting a force (Fᵢ) on the WIM sensor (2) can be detected as measurement signals (Sᵢ, Sⱼ, Sₖ) by at least three adjacent measurement zones (Mᵢ, Mⱼ, Mₖ).

2. WIM system (1) according to claim 1; further comprising at least one presence sensor (11) which is set up to determine the presence of a vehicle (7) on the lane (3); and wherein each two adjacent measurement zones (Mᵢ, Mⱼ, i=j±1) have a distance (dᵢⱼ) along the longitudinal axis (8) of the WIM sensor (2) from each other.

3. WIM system (1) according to claim 2; wherein each measuring zone (Mᵢ) comprises at least one measuring element (16); wherein the measuring element (16) is a piezoelectric measuring element, or a piezoresistive measuring element, or a measuring element with strain gauges, or a fiber-optic measuring element introduced in an optical fiber.

4. A WIM system (1) according to any one of claim 2 to 3; wherein the WIM sensor (2) comprises a profile (17) elongated along the longitudinal axis (8); or wherein the WIM sensor (2) comprises a profile (17) elongated along the longitudinal axis (8) with a space (18) formed substantially along the longitudinal axis (8), each measuring element (16) arranged preloaded in the space (18).

5. WIM system (1) according to any one of claims 2 to 4; wherein the presence sensor (11) may be one of the following: an induction loop; an optical sensor such as a laser sensor or a camera or a LIDAR; a RADAR; an additional WIM sensor arranged at an alignment angle (20) between 45° and 90° to the direction of travel (6).

6. The WIM system (1) according to any one of claims 2 to 5; wherein the alignment angle (20) is less than or equal to the arc cosine of the quotient of the width of a wheel contact patch (10) of the wheel (13) in the denominator and a length (dᵢₖ) along the longitudinal axis (8) in the numerator; wherein the length (dᵢₖ) extends over at least three measurement zones (Mᵢ, Mⱼ, Mₖ).

7. WIM system (1) according to any one of claims 2 to 6 further comprising at least one evaluation unit (15), wherein the evaluation unit (15) is set up to form and provide the mean value (MS) of the measurement signals (Sᵢ) provided when the wheel (13) passes.

8. WIM system (1) according any one of claims 2 to 6 further comprising at least one evaluation unit (15); wherein the evaluation unit (15) is set up to determine a difference time (tᵢⱼ) for at least two measurement zones (Mᵢ, Mⱼ); wherein the difference time (tᵢⱼ) is a time difference of the respective measurement signals (Sᵢ, Sⱼ) of the at least two measurement zones (Mᵢ, Mⱼ).

9. WIM system (1) according to claim 8; wherein the alignment angle (20) is smaller than 35°.

10. WIM system (1) according to claim 7; wherein the evaluation unit (15) is adapted to form and provide a deviation (DS) from the mean value (MS) of the measurement signals (Sᵢ) provided when a wheel (13) passes; wherein the deviation (DS) is the standard deviation, or the variance, or the maximum deviation, or proportional to the standard deviation, or proportional to the variance, or proportional to the maximum deviation, or is another stochastic dispersion measure.

11. WIM system (1) according to a combination of claim 8 and 10; in that the evaluation unit (15) is set up to form and provide a wheel speed (vᵢⱼ) from the projection of the distance (dᵢⱼ) of the at least two measurement zones (Mᵢ, Mⱼ) onto the direction of travel (6) and the associated difference time (tᵢⱼ).

12. WIM system (1) according to 11; wherein the evaluation unit (15) is adapted to form and provide a sorting signal (21); wherein the sorting signal (21) assumes a first value if the deviation (DS) exceeds a pre-defined threshold value and/or at least two formed wheel speeds (vᵢⱼ, vⱼₖ) differ from one another by more than a pre-defined threshold value and/or at least two measurement signals (Mi, Mj) differ from one another by more than a pre-defined threshold value; and wherein the sorting signal (21) assumes a second value if the deviation (DS) falls below a pre-defined threshold value or is equal to this threshold value and/or at least two formed wheel speeds (vᵢⱼ, vⱼₖ) deviate from each other by less than a pre-defined threshold value or deviate from each other by exactly this threshold value and/or at least two measurement signals (Mi, Mj) deviate from each other by more than a pre-defined threshold value or deviate from each other by exactly this threshold value; wherein the first value of the sorting signal (21) is different to the second value of the sorting signal (21) .

13. Method for determining a measure of confidence in a measured wheel force (Fᵢ) using a WIM system (1) according to one of claims 2 to 12, wherein a presence of a vehicle on the lane the WIM sensor (2) is arranged is detected; wherein if a wheel force (Fᵢ) is exerted on the WIM sensor (2) by a wheel (13) passing over the WIM sensor (2) the following steps are performed:
i. The wheel force (Fᵢ) of each measurement zone (Mᵢ) traversed is provided as a measurement signal (Sᵢ);
ii. A confidence level (22) is set according to the difference of the at least three measurement signals (Sᵢ, Sⱼ, Sₖ) among another or wherein an average value (MS) of at least three measurement signals (Sᵢ, Sⱼ, Sₖ) is formed and a confidence level (22) is set according to a deviation (DS) of the measurement signals (Sᵢ) provided when the wheel (13) passes wherein the deviation (DS) is the standard deviation, or the variance, or the maximum deviation, or proportional to the standard deviation, or proportional to the variance, or proportional to the maximum deviation, or is another stochastic dispersion measure;

14. Method according to the preceding claim, comprising the steps that
i. A difference time (tᵢⱼ) is determined for at least two measurement zones (Mᵢ, Mⱼ);
ii. The difference time (tᵢⱼ) is a time difference of the respective measurement signals (Sᵢ, Sⱼ) of the at least two measurement zones (Mᵢ, Mⱼ);
iii. A wheel speed (vᵢⱼ) is formed from a distance (dᵢⱼ) of the at least two measurement zones (Mᵢ, Mⱼ) along the direction of travel and an associated difference time (tᵢⱼ);
iv. The confidence level (22) is also set by a stochastic dispersion measure of at least two wheel speeds (vᵢⱼ, vₖₗ).

15. Method according to any of the three preceding claims, wherein the presence sensor (11) is an additional WIM sensor arranged at an alignment angle (20) between 45° and 90° to the direction of travel (6); and wherein the wheel also passes the presence sensor (11); wherein the presence sensor (11) has at least one measuring zone determining at least one force (fp) and at least one corresponding measurement signal (P) of the presence sensor (11); and wherein the confidence level (22) is set according to the difference of the at least three measurement signals (Sᵢ, Sⱼ, Sₖ) and the measurement signal (P) determined by the presence sensor (11) among another or wherein an average value (MS) of at least three measurement signals (Sᵢ, Sⱼ, Sₖ) and the measurement signal (P) determined by the presence sensor (11) is formed and the confidence level (22) is set according to the deviation (DS).
